## Europäisches Patentamt

## European Patent Office

## Office européen des brevets

(11) Veröffentlichungsnummer: **0 217 013**
**B1**

(12) **EUROPÄISCHE PATENTSCHRIFT**

(45) Veröffentlichungstag der Patentschrift:
26.04.89

(51) Int. Cl.⁴: **A47C 3/30, A47B 9/10, F16F 9/02**

(21) Anmeldenummer: **86109356.5**

(22) Anmeldetag: **09.07.86**

(54) **Längenverstellbare Gasfeder.**

(30) Priorität: **31.08.85 DE 8524995 U**

(43) Veröffentlichungstag der Anmeldung:
**08.04.87 Patentblatt 87/15**

(45) Bekanntmachung des Hinweises auf die Patenterteilung:
**26.04.89 Patentblatt 89/17**

(84) Benannte Vertragsstaaten:
**AT BE CH DE FR GB IT LI NL SE**

(56) Entgegenhaltungen:
**DE-A- 2 334 180**
**DE-A- 2 705 259**
**DE-A- 2 907 100**

(73) Patentinhaber: **Fritz Bauer + Söhne oHG,
Industriestrasse 12-14, D-8503 Altdorf b. Nürnberg(DE)**

(72) Erfinder: **Bauer, Hans-Peter, Ziegelhütte 9,
D-8503 Altdorf(DE)**
Erfinder: **Bauer, Hans Jürgen, Am Eichenhain 8,
D-8503 Altdorf(DE)**
Erfinder: **Stadelmann, Ludwig, Schopperstrasse 14,
D-8503 Altdorf(DE)**

(74) Vertreter: **Rau, Manfred, Dr. Dipl.-Ing. et al, Rau &
Schneck, Patentanwälte Königstrasse 2,
D-8500 Nürnberg 1(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine längenverstellbare Gasfeder nach dem Oberbegriff des Anspruches 1.

Derartige Gasfedern sind beispielsweise aus der DE-PS 1 812 282 (entsprechend US-PS 3 656 593) bekannt. Wegen ihrer vorteilhaften Eigenschaften insbesondere als längenverstellbare Hubvorrichtungen in Stuhlsäulen und dgl. haben sich diese Gasfedern in der Praxis außerordentlich bewährt. Die Ventilkörper werden als Metall-Drehteile hergestellt, d.h. die Außennuten zur Aufnahme der Außen-Ringdichtungen werden durch sogenanntes Einstechen erzeugt. Bei diesem Drehvorgang können Späne sich in der Außennut festsetzen, die auch durch nachfolgende Waschvorgänge nicht beseitigt werden. Derartige Späne bleiben dann unter Umständen in der Außennut und führen während des Gebrauchs der Gasfeder zu einer Beschädigung der Außen-Ringdichtung mit der Folge, daß die Gasfeder unbrauchbar wird.

Der Erfindung liegt daher die Aufgabe zugrunde, eine längenverstellbare Gasfeder der gattungsgemäßen Art so auszugestalten, daß die Gefahr eines Unbrauchbarwerdens der Gasfeder durch Beschädigung einer der Außen-Ringdichtungen vermieden wird.

Diese Aufgabe wird erfindungsgemäß durch die Merkmale im Kennzeichnungsteil des Anspruches 1 gelöst. Durch die Formgebung des Ventilkörpers ist es möglich, diesen als Kunststoffspritzteil auszubilden, wobei keine Teilung der Spritzform in einer Achsebene notwendig ist. Vielmehr kann die Teilung der Spritzform in einer Querschnittsebene in dem Bereich zwischen den beiden Außennuten erfolgen. Das Entformen kann durch Auseinanderziehen der Formhälften in Achsrichtung erfolgen. Dadurch ist sichergestellt, daß der beim Spritzen hergestellte Boden und die einander zugewandten Seitenwände der Außennuten völlig gratfrei hergestellt werden können. Durch die weitere erfinderische Ausgestaltung ist sichergestellt, daß einerseits der sich über einen vollständigen Umfang von 360° erstreckende Deckel einerseits und der entsprechende Ring andererseits die jeweils fehlende Seitenwand der entsprechenden Außennut bilden. Die unmittelbare Verbindung zwischen dem Deckel und dem Ventilkörper an der besagten Stelle führt zu einer zuverlässigen Abdichtung und stellt sicher, daß auch die dem benachbarten Gehäuseraum zugeordnete innere Ringdichtung sauber abdichtend zwischen Ventilkörper und Deckel und Ventilstift wirkt. Durch die Ausgestaltung des Ventilkörpers als Kunststoffspritzteil wird sein Gewicht verringert, was auch zu einer Verbesserung der Gebrauchseigenschaften führt. Die erfindungsgemäße Ausgestaltung führt außerdem zu einer Vereinfachung der Herstellung und damit zu einer Verringerung des Herstellungsaufwandes.

Die Ausgestaltung nach Anspruch 2 führt zu einer weiteren Gewichtsverringerung mit der genannten Verbesserung der Gebrauchseigenschaften. Diese Maßnahme ermöglicht auch die Weiterbildung gemäß Anspruch 3, wodurch eine besonders zuverlässige und feste und damit betriebssichere Verbindung zwischen Deckel und Ventilkörper erreicht wird.

Bei einer Weiterbildung nach Anspruch 4 werden die Führungseigenschaften, d.h. insbesondere die Führungslänge für den Ventilstift günstiger gestaltet, was auch zu einer Erhöhung der Betriebssicherheit und damit zu einer Verbesserung der Gebrauchseigenschaften der Gasfeder führt. Wenn die Weiterbildung nach Anspruch 5 vorgenommen wird, dann führt auch dies zu einer Gewichtsverringerung der Gasfeder insgesamt und außerdem zu einer Verringerung der Reibung zwischen Ventilstift und Ventilkörper, so daß eine Erleichterung der Betätigung des Ventils erreicht wird. Außerdem wird die Gefahr einer Kaltkorrosion zwischen Ventilstift und Ventilkörper samt Ring und Deckel ausgeschlossen, wie sie prinzipiell dann besteht, wenn der Ventilkörper aus Metall, und zwar insbesondere aus Aluminium besteht.

Anspruch 6 gibt eine vorteilhafte und ausreichende Art der Verbindung zwischen Ring und Ventilkörper wieder.

Weitere Vorteile und Merkmale der Erfindung ergeben sich aus der nachfolgenden Beschreibung eines Ausführungsbeispiels anhand der Zeichnung. Es zeigt

Fig. 1 einen Längsschnitt durch eine längenverstellbare Gasfeder nach der Erfindung,

Fig. 2 eine leicht abgewandelte Ausführungsform des Ventils einer erfindungsgemäßen Gasfeder in vergrößertem Maßstab im Längsschnitt und

Fig. 3 eine weitere Ausführungsform eines Ventils der erfindungsgemäßen Gasfeder im Längsschnitt.

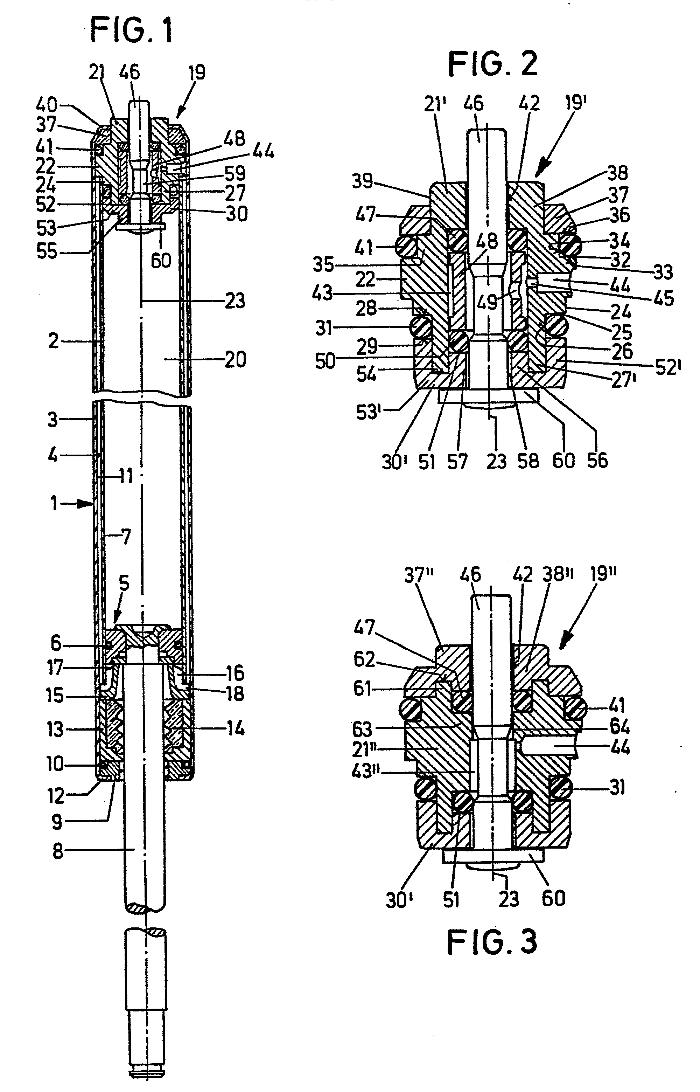

Die in Fig. 1 dargestellte längenverstellbare Gasfeder weist ein Gehäuse 1 auf, das im wesentlichen aus zwei konzentrisch ineinander gelagerten Rohren mit unterschiedlichem Durchmesser, nämlich einem Innenzylinder 2 und einem Außenzylinder 3 besteht. Zwischen dem Außenzylinder 3 und dem Innenzylinder 2 ist aufgrund des unterschiedlichen Durchmessers von Innenzylinder 2 und Außenzylinder 3 ein Ringraum 4 gebildet.

In dem Innenzylinder 2 ist ein etwa ringförmiger Kolben 5 axial verschiebbar angeordnet, der über einen Dichtungsring 6 gasdicht mit seinem Außenumfang gegenüber der Innenwand 7 des Innenzylinders 2 abgedichtet ist. Der Kolben 5 ist an einem Ende einer koaxial zum Gehäuse 1 geführten Kolbenstange 8 befestigt. Diese Kolbenstange 8 ist aus einem Ende des Gehäuses 1 herausgeführt. An diesem Ende ist das Gehäuse 1 durch eine Abschlußscheibe 9 verschlossen, die an ihrem Außenumfang mittels einer Ringdichtung 10 gegenüber der Innenwand 11 des Außenzylinders gasdicht abgedichtet ist. Die Abschlußscheibe 9 ist durch eine Umbördelung 12 des Außenzylinders 3 axial nach außen gehalten. Auf der Innenseite liegt gegen die Abschlußscheibe 9 eine topfförmige Hülse 13 an, die eine Mehrfach-Lippen-Dichtung 14 aufnimmt, die mit ihren Lippen dichtend gegen die Kolbenstange 8 anliegt. Dadurch wird ein Gasaustritt entlang der Oberfläche der Kolbenstange 8 nach außen unterbunden.

Gegen die Hülse 13 stützt sich vom Innenraum des Gehäuses 1 her ein an der Innenwand 11 des Außenzylinders 3 anliegendes Zentrierstück 15 ab, das mit Rippen 16 versehen ist, auf denen der Innenzylinder 2 mit seiner Innenwand 7 radial abgestützt, also zentriert ist. Auf diesen Rippen 16 ist der Innenzylinder 2 auch axial fest abgestützt, also axial einseitig festgelegt. Dadurch daß nur Rippen 16 zur Zentrierung und axialen Abstützung des Innenzylinders 2 vorgesehen sind, ist in diesem Bereich der Ringraum 4 mit dem Gehäuseraum 17 im Innenzylinder 2 verbunden, der zwischen dem Kolben 5, dem kolbenstangenaustrittsseitigen Ende des Gehäuses 1 und der Innenwand 7 des Innenzylinders 2 begrenzt wird. Zwischen den Rippen 16 sind also Überströmkanäle 18 zwischen dem Gehäuseraum 17 und dem Ringraum 4 gebildet.

An dem dem Kolbenstangenaustritt entgegengesetzten Ende des Gehäuses 1 ist ein Ventil 19 angeordnet, mittels dessen der im Innenzylinder 2 zwischen dem Kolben 5 und dem Ventil 19 befindliche Gehäuseraum 20 mit dem Ringraum 4 und damit dem anderen Gehäuseraum 17 verbunden bzw. von diesem getrennt werden kann. Da das in Fig. 1 dargestellte Ventil 19 und das in Fig. 2 dargestellte Ventil 19' weitgehend identisch sind, werden sie nachfolgend gemeinsam beschrieben, wobei lediglich konstruktiv nicht identische Teile mit einem hochgesetzten ' hinter der Bezugsziffer bezeichnet werden.

Die Ventile 19 bzw. 19' weisen einen Ventilkörper 21, 21' auf, der jeweils in seinem axial mittleren Bereich mit einem Ringbund 22 versehen ist, der an der Innenwand 11 des Außenzylinders 3 anliegt, wodurch der Ventilkörper 21 bzw. 21' im Außenzylinder 3 zentriert wird. Dieser Ringbund 22 ist der Abschnitt größten Durchmessers am gesamten Ventilkörper 21 bzw. 21' und befindet sich etwa im axial mittleren Bereich. Wenn in der Beschreibung von "axial" gesprochen wird, dann bezieht sich dies immer auf die Mittel-Längs-Achse 23 der Gasfeder, die gleichzeitig auch Symmetrieachse aller Einzelteile und Baugruppen ist.

Zum Gehäuseraum 20 hin schließt sich an den Ringbund 22 ein Zentrierbund 24 geringeren Durchmessers an, der an der Innenwand 7 des Innenzylinders 2 anliegt, wodurch letzterer relativ zum Außenzylinder 3 zentriert wird. Gleichzeitig liegt der Innenzylinder 2 mit seinem zugeordneten Rand gegen die zugewandte Seitenfläche des Ringbundes 22 an, wodurch er axial gehalten wird.

An den Zentrierbund 24 schließt sich wiederum in Richtung auf den Gehäuseraum 20 eine Außennut 25 an, deren Boden 26 durch einen hülsenförmigen Abschnitt 27 bzw. 27' des Ventilkörpers 21 bzw. 21' gebildet wird, dessen Außendurchmesser wiederum geringer ist als der Außendurchmesser des Zentrierbundes 24. Eine, dem Ringbund 22 zugewandte Seitenwand 28 der Außennut 25 wird durch die entsprechende Seitenfläche des Zentrierbundes 24 am Übergang von diesem zum Abschnitt 27 bzw. 27' gebildet. Die andere, dem Gehäuseraum 20 zugewandte Seitenwand 29 der Außennut 25 wird durch einen Deckel 30 bzw. 30' gebildet. In der Außennut 25 befindet sich eine Außen-Ringdichtung 31, die dichtend gegen die Innenwand 7 des Innenzylinders 2 anliegt, so daß dort ein Gasdurchtritt im Kurzschluß vom Gehäuseraum 20 zum Ringraum 4 und damit dem anderen Gehäuseraum 17 ausgeschlossen ist.

Axial gesehen zur Außenseite des Gehäuses 1 hin schließt sich an den Ringbund 22 eine Außennut 32 an, deren eine, der anderen Außennut 25 zugewandte Seitenwand 33 durch die entsprechende Seitenfläche des Ringbundes 22 gebildet ist. Ihr Boden 34 wird durch einen Ringabschnitt 35 gebildet, der sich an den Ringbund 22 anschließt, und dessen Außendurchmesser geringer ist als derjenige des Ringbundes 22. Die zur Außenseite des Gehäuses 1 hin gelegene Seitenwand 36 der Außennut 32 wird durch einen Ring 37 gebildet. Dieser Ring 37 ist auf einem zylindrischen Führungsabschnitt 38 angeordnet, dessen Außendurchmesser wiederum geringer ist als der des Ringabschnitts 35, und der sich aus dem Gehäuse 1 der Gasfeder herauserstreckt. Der Ring 37 ist auf der zylindrischen Außenfläche 39 des Führungsabschnitts 38 mit Preßsitz festgelegt. Wie aus Fig. 1 hervorgeht, ist der äußere Rand des Außenzylinders 3 mit einer Umbördelung 40 um die Außenseite des Rings 37 herumgedrückt, wodurch das ganze Ventil 19, 19' nach außen gehalten und gleichzeitig axial nach innen gegen den Innenzylinder 2 gepreßt wird.

Der aus dem Führungsabschnitt 38, dem Ringabschnitt 35, dem Ringbund 22, dem Zentrierbund 24 und dem hülsenförmigen Abschnitt 27 bzw. 27' bestehende Ventilkörper 21 bzw. 21' ist einstückig aus Kunststoff geformt und — wie sich aus der vorhergehenden Beschreibung ergibt — symmetrisch zur Mittel-Längs-Achse 23 aufgebaut, so daß er mit einer Form gespritzt werden kann, die nur in einer quer zur Achse 23 liegenden Ebene getrennt ist, die wiederum im Bereich des Ringbundes 22 angeordnet ist. Von hier aus verjüngt sich der Ventilkörper 21 bzw. 21' axial jeweils zu seinen Enden hin, und zwar stufenweise. Auch der Ring 37 besteht aus Kunststoff. In der Außennut 32 ist eine Außen-Ringdichtung 41 angeordnet, die gegen die Innenwand 11 des Außenzylinders 3 anliegt und damit einen Gasaustritt in diesem Bereich nach außen unterbindet.

Der Ventilkörper 21 bzw. 21' ist im Bereich seines Führungsabschnitts 38 mit einer zylindrischen koaxialen Führungsbohrung 42 versehen, an die sich bis zum Gehäuseraum 20 hin ein ebenfalls zylindrischer Ventilkörper-Innenraum 43 anschließt, der sich also axial über den Bereich vom Ringabschnitt 35 bis zum hülsenförmigen Abschnitt 27 bzw. 27' erstreckt. Dieser Innenraum 43 hat einen größeren Durchmesser als die Führungsbohrung 42. Die Herstellung des Ventilkörpers 21, 21' stellt auch bezüglich des inneren Bereichs keine Probleme dar, da für den Innenraum 43 und die sich anschließende Führungsbohrung 42 ein Kern verwendet werden kann.

In diesen Innenraum 43 mündet ein den Ringbund 22 radial durchsetzender Überströmkanal 44 ein, der an seiner Außenseite in den Ringraum 4 einmündet. Am Austritt in den Innenraum 43 ist der Überströmkanal 44 mit einer Drosselöffnung 45 versehen.

Im Ventilkörper 21 bzw. 21' ist ein Ventilstift 46 angeordnet, der nach außen aus dem Führungsabschnitt 38 und damit aus der Gasfeder herausragt. Dieser im wesentlichen zylindrische Ventilstift 46 ist in der Führungsbohrung 42 geführt. Am Übergang von der Führungsbohrung 42 zum Innenraum 43 ist eine Innen-Ringdichtung 47 angeordnet, die axial nach außen durch den Übergang zwischen Innenraum 43 zur Führungsbohrung 42 festgelegt ist und die radial einerseits am Ventilstift 46 und andererseits an der Wand des Innenraums 43 anliegt, so daß ein Gasaustritt durch die Führungsbohrung 42 ausgeschlossen ist. Die Innen-Ringdichtung 47 ist axial in Richtung auf den Gehäuseraum 20 durch eine Distanzhülse 48 festgelegt, die mit ein oder mehreren Durchtrittsöffnungen 49 versehen ist, so daß das Gas auch in die Distanzhülse 48 gelangen kann.

An dem dem Gehäuseraum 20 zugewandten Ende der Distanzhülse 48 liegt ebenfalls eine Innen-Ringdichtung 50 an, die radial gegen die Innenwand des Innenraums 43 und gegen den Ventilstift 46 anliegt. Axial zum Gehäuseraum 20 liegt sie gegen eine entsprechende Anlagefläche 51 des Deckels 30 bzw. 30' an.

Der Deckel 30 ist bei der Ausführung nach Fig. 1 topfförmig ausgebildet, d.h. er weist einen äußeren sich axial zur Außenseite der Gasfeder hin erstreckenden Ringsteg 52 auf, an dem die Seitenwand 29 der Außennut 25 ausgebildet ist. Er weist weiterhin einen ringscheibenförmigen Abschnitt 53 auf, der mit der dem Gehäuseraum 20 zugewandten Stirnseite 54 des hülsenförmigen Abschnitts 27 durch Verschweißen oder Verkleben, insbesondere durch Ultraschallverschweißung, verbunden ist. Da auch der Deckel 30 bzw. 30' aus Kunststoff besteht, ist dies leicht realisierbar. An dem ringscheibenförmigen Abschnitt 53 liegt radial innerhalb der Stirnseite 54 die Innen-Ringdichtung 50 an.

Von dem ringscheibenförmigen Abschnitt 53 erstreckt sich noch ein kurzer ringzylindrischer Distanzsteg 55 in den Gehäuseraum 20 hinein.

Bei der Ausgestaltung nach Fig. 2 weist der Deckel 30' ebenfalls einen äußeren, axial etwas länger ausgestalteten Ringsteg 52' und einen mit der Stirnseite 54 des hülsenförmigen Abschnitts 27' in der genannten Weise verbundenen ringscheibenförmigen Abschnitt 53' auf. Radial innen erstreckt sich von diesem ringscheibenförmigen Abschnitt 53' ein Ringzylindersteg 56 axial nach außen, gegen den die Innen-Ringdichtung 50 anliegt.

Der Deckel 30 bzw. 30' weist eine koaxiale Bohrung 57 auf, deren Durchmesser etwas größer ist als der Durchmesser des Ventilstiftes 46 in diesem Bereich, so daß hier ein ringförmiger Durchlaßkanal 58 gebildet wird.

In der in den Zeichnungsfiguren dargestellten Ruhelage des Ventilstiftes 46, in dem die Ventile 19, 19' geschlossen sind, befindet sich eine Einschnürung 59 des Ventilstiftes 46 zwischen den Innen-Ringdichtungen 47 und 50, d.h. der Gehäuseraum 20 ist gasdicht vom Ringraum 4 und damit vom Gehäuseraum 17 getrennt. Durch Einschieben des Ventilstiftes 46 in den Ventilkörper 21, 21' überbrückt die Einschnürung 59 die dem Gehäuseraum 20 zugewandte Innen-Ringdichtung 50, so daß Gas vom Gehäuseraum 17 durch den Ringraum 4, den Ventilkörper-Innenraum 43 und den Durchlaßkanal 58 in den Gehäuseraum 20 und umgekehrt strömen kann.

Der Ventilstift weist an seinem im Gehäuseraum 20 gelegenen Ende einen Anschlagteller 60 auf, so daß er nicht durch den Gasdruck nach außen herausgedrückt werden kann. Die grundsätzliche Wirkungsweise dieser längenverstellbaren Gasfeder ist im übrigen allgemein bekannt, beispielsweise aus der DE-PS 1 812 282 (entsprechend US-PS 3 656 593). Auch die Distanzhülse 48 ist aus Kunststoff.

Das Ventil 19" nach Fig. 3 stimmt in weiten Bereichen mit dem Ventil 19 bzw. 19' überein, so daß von einer erneuten Beschreibung Abstand genommen wird. Die wesentlichen Bezugsziffern werden in Übereinstimmung mit den Fig. 1 und/oder 2 in Fig. 3 verwendet. Lediglich unterschiedliche Bereiche werden nachfolgend beschrieben. Funktionell gleich aber konstruktiv anders gestaltete Teile werden mit einem hochgesetzten " versehen.

Der Ring 37" ist bei dem Ventil 19" größer ausgestaltet, d.h. er umfaßt auch den Führungsabschnitt 38" mit der Führungsbohrung 42, so daß auch die den Ventilkörper-Innenraum 43" nach außen begrenzende Innen-Ringdichtung 47 gegen den Ring 37" anliegt. Am Ventilkörper 21" ist ein koaxial verlaufender Zentrier-Ringsteg 61 ausgebildet, der in eine entsprechende Zentrier-Ringnut 62 im Ring 37" eingreift, wodurch der Ring 37" und der Ventilkörper 21" exakt miteinander fluchtend und konzentrisch zur Achse 23 miteinander verbunden werden. Die äußere Innen-Ringdichtung 47 kann also vor dem Aufsetzen des Rings 37" auf den Ventilkörper 21" eingelegt werden, d.h. es bedarf keiner als gesondertes Bauteil ausgebildeten Distanzhülse. Die Innen-Ringdichtung 47 liegt vielmehr gegen einen einstückig mit dem Ventilkörper 21" ausgebildeten Bereich 63 an, der noch eine Zusatz-Führungsbohrung 64 aufweist. Dieser Bereich 63 mit der Zusatz-Führungsbohrung 64 erstreckt sich bis zum (gegenüber der Ausführung nach Fig. 1 und 2 verkleinerten) Ventilkörper-Innenraum 43". Damit wird die gesamte Führungslänge für den Ventilstift 46 und damit die Gefahr von Verkantungen und dgl. verringert. Auch der Ring 37" besteht aus Kunststoff.

Als Kunststoffe für die Ventilkörper 21, 21', 21", die Deckel 30, 30' und die Ringe 37, 37" kommen insbesondere Polyamide in Betracht.

Auch der Ventilkörper 21" nach Fig. 3 kann in einer Spritzform hergestellt werden, die lediglich quer zur Längsachse 23 im Bereich des Ringbundes 22 geteilt ist, wobei ein den Innenraum 43" und die Führungsbohrung 42 formender Kern vorgesehen ist. In keinem Fall entstehen Grate im Bereich der Außennuten.

**Patentansprüche**

1. Längenverstellbare Gasfeder, mit zwei einander konzentrisch umschließenden, zwischen sich einen Ringraum (4) begrenzenden und zumindest teilweise mit einem Druckgas gefüllten Zylindern (2, 3), mit einem in dem Innenzylinder (2) gleitend angeordneten und an dessen Innenwand (7) mit einer Dichtung anliegenden, den Innenraum des Innenzylinders in zwei Gehäuseräume trennenden Kolben, der mit einer zu einem Zylinderende hin abgedichtet nach außen herausgeführten Kolbenstange (8) verbunden ist, mit einem den Ringraum (4) und den zugeordneten Gehäuseraum (17) im Bereich des Kolbenstangenaustritts verbindenden Überströmkanal (18), mit einem die Zylinder am entgegengesetzten Ende nach außen abschließenden und den Ringraum mit dem anderen Gehäuseraum verbindenden Ventil (19, 19', 19"), wobei das Ventil einen Ventilkörper (21, 21', 21") aufweist, der mit einer in einer Außennut (25) angeordneten, an der Innenwand (7) des Innenzylinders (2) anliegenden Außen-Ringdichtung (31) und mit mindestens einer in einer Außennut (32) angeordneten, an der Innenwand (11) des Außenzylinders (3) anliegenden Außen-Ringdichtung (41) versehen ist, wobei im Ventilkörper (21, 21', 21") ein von einem Ventilstift (46) axial durchsetzter, mit dem Ringraum (4) verbundener Ventilkörper-Innenraum (43, 43', 43") ausgebildet ist, der durch eine am Ventilstift (46) anliegende Innen-Ringdichtung (47) nach außen und eine im Abstand hierzu angeordnete Innen-Ringdichtung (50) zum benachbarten Gehäuseraum (20) hin abgedichtet ist, wobei die dem Gehäuseraum (20) zugewandte Innen-Ringdichtung (50) gegen einen unlösbar mit dem Ventilkörper (21, 21', 21") verbundenen Deckel (30, 30') zum Gehäuseraum hin anliegt, dadurch gekennzeichnet, daß der als Kunststoffspritzteil ausgebildete Ventilkörper (21, 21', 21") ausgehend von einem Bereich zwischen den beiden Außennuten (25, 32) sich zu seinen axialen Enden hin ohne radiale Vorsprünge – gegebenenfalls stufenweise – verjüngt, daß die dem Innenzylinder (2) zugeordnete Außennut (25) axial zum benachbarten Gehäuseraum (20) hin durch den Deckel (30, 30') begrenzt wird, der mit dem Ventilkörper (21, 21', 21") unmittelbar verbunden ist, und daß die der Innenwand (11) des Außenzylinders (3) zugeordnete Außennut (32) zur Außenseite der Gasfeder hin axial durch einen gesonderten, fest mit dem Ventilkörper (21, 21', 21") verbundenen Ring (37, 37") begrenzt ist.

2. Gasfeder nach Anspruch 1, dadurch gekennzeichnet, daß der Deckel (30, 30') aus Kunststoff besteht.

3. Gasfeder nach Anspruch 1, dadurch gekennzeichnet, daß der Deckel (30, 30') mit dem Ventilkörper (21, 21', 21") im Bereich zwischen der Innen-Ringdichtung (50) und der Außennut (25) durch Verschweißen, Verkleben od.dgl. verbunden ist.

4. Gasfeder nach Anspruch 1, dadurch gekennzeichnet, daß der Ring (37") als Anlage für die nach außen abdichtende Innen-Ringdichtung (47) dient.

5. Gasfeder nach Anspruch 1, dadurch gekennzeichnet, daß der Ring (37, 37") aus Kunststoff besteht.

6. Gasfeder nach Anspruch 1, dadurch gekennzeichnet, daß der Ring (37, 37") mit dem Ventilkörper (21, 21', 21") durch Preßsitz verbunden ist.

## Revendications

1. Ressort à gaz réglable en longueur, comprenant deux cylindres (2, 3) se ceinturant mutuellement de manière concentrique, délimitant entre eux un interstice annulaire (4) et emplis au moins partiellement d'un gaz comprimé; un piston qui est logé à coulissement dans le cylindre interne (2), est appliqué par une garniture d'étanchement contre la paroi intérieure (7) de ce dernier, scinde l'espace interne du cylindre interne en deux compartiments de carter, et est relié à une tige (8) de piston dépassant, vers l'extérieur, avec étanchement en direction d'une extrémité des cylindres; un canal de transfert (18), reliant l'interstice annulaire (4) et le compartiment associé (17) du carter, au voisinage de la sortie de la tige de piston; une soupape (19, 19', 19") qui obture les cylindres vers l'extérieur, à l'extrémité opposée, et relie l'interstice annulaire à l'autre compartiment du carter, cette soupape présentant un corps de soupape (21, 21', 21") qui est pourvu d'une garniture annulaire extérieure d'étanchement (31) logée dans une rainure extérieure (26) et appliquée contre la paroi intérieure (7) du cylindre interne (2), ainsi que d'au moins une garniture annulaire extérieure d'étanchement (41) logée dans une rainure extérieure (32) et appliquée contre la paroi intérieure (11) du cylindre externe (3), une chambre intérieure (43, 43', 43") de corps obturateur, traversée axialement par une queue (46) de soupape et reliée à l'interstice annulaire (4), étant ménagée dans le corps de soupape (21, 21', 21") et étant rendue étanche, vers l'extérieur, par une garniture annulaire intérieure d'étanchement (47) appliquée contre la queue (46) de soupape et, en direction du compartiment attenant (20) du carter, par une garniture annulaire intérieure d'étanchement (50) disposée à distance de la garniture précitée, la garniture annulaire intérieure d'étanchement (50) tournée vers le compartiment (20) du carter étant appliquée, vers ce compartiment du carter, contre un couvercle (30, 30') relié de manière indissociable au corps de soupape (21, 21', 21"), caractérisé par le fait que le corps de soupape (21, 21', 21"), réalisé sous la forme d'une pièce en matière plastique venue d'injection, se rétrécit sans saillies radiales – éventuellement par gradins – en direction de ses extrémités axiales, à partir d'une région située entre les deux rainures extérieures (25, 32); par le fait que la rainure extérieure (25) associée au cylindre interne (2) est délimitée dans le sens axial, vers le compartiment attenant (20) du carter, par l'intermédiaire du couvercle (30, 30') directement relié au corps de soupape (21, 21', 21"); et par le fait que la rainure extérieure (32) associée à la paroi intérieure (11) du cylindre externe (3) est délimitée dans le sens axial, vers la face externe du ressort à gaz, par un anneau distinct (37, 37") relié rigidement au corps de soupape (21, 21', 21").

2. Ressort à gaz selon la revendication 1, caractérisé par le fait que le couvercle (30, 30') consiste en une matière plastique.

3. Ressort à gaz selon la revendication 1, caractérisé par le fait que le couvercle (30, 30') est relié au corps de soupape (21, 21', 21") par soudage, collage ou procédé similaire, dans la région située entre la garniture annulaire intérieure d'étanchement (50) et la rainure extérieure (25).

4. Ressort à gaz selon la revendication 1, caractérisé par le fait que l'anneau (37") sert d'appui à la garniture annulaire intérieure d'étanchement (47) qui assure l'étanchéité vers l'extérieur.

5. Ressort à gaz selon la revendication 1, caractérisé par le fait que l'anneau (37, 37") consiste en une matière plastique.

6. Ressort à gaz selon la revendication 1, caractérisé par le fait que l'anneau (37, 37") est relié au corps de soupape (21, 21', 21") par emmanchement à force.

## Claims

1. An adjustable-length gas spring comprising two cylinders (2, 3), concentrically disposed with a common axis, said cylinders defining an annular chamber (4) between them and being at least partially filled with a compressed gas, a piston arranged to slide in the inner cylinder (2), said piston resting with a seal on the inner wall (7) of the inner cylinder (2) and dividing the interior of the inner cylinder into two housing chambers, said piston being connected to a piston rod (8) extending to the outside and sealed with respect to one end of the cylinder, an overflow conduit (18) effecting communication between the annular chamber (4) and the associated housing chamber (17) in the vicinity of where the piston rod emerges, a valve (19, 19', 19") closing off the cylinders from the outside at the opposite end and joining the annular chamber to the other housing chamber, said valve having a valve body (21, 21', 21") provided with an outer ring seal (31) disposed in an outer groove (25) and resting on the inner wall (7) of the inner cylinder (2), and at least one outer ring seal (41) disposed in an outer groove (32) and resting on the inner wall (11) of the outer cylinder (3), an interior valve body chamber (43, 43', 43") communicating with the annular chamber (4) being formed in the valve body (21, 21', 21") and being axially penetrated by a valve pin (46), which interior valve body chamber is sealed with respect to the outside by an inner ring seal (47) resting on said valve pin (46) and sealed with respect to the adjoining housing chamber (20) by an inner ring seal (50) spaced apart from the inner ring seal (47) resting on the valve pin (46), wherein the inner ring seal (50) facing towards the housing chamber (20) rests against a cap (30, 30') in the direction of the housing chamber, which cap is undetachably joined to the valve body (21, 21', 21"), characterized in that the valve body (21, 21', 21") is an injection-molded plastic part and, beginning at a region between two outer grooves (25, 32), tapers – stepwise as the case may be – towards its axial ends without radial protrusions, that the outer groove (25) associated with the inner cylinder (2) is axially defined with respect to the adjoining housing chamber (20) by the cap (30, 30'), which is directly connected to the valve body (21, 21', 21"), and that the outer groove (32) associated with the inner wall (11) of the outer cylinder (3) is defined axially with respect to the outside of the gas spring by a separate ring (37, 37") firmly joined to the valve body (21, 21', 21").

2. A gas spring in accordance with claim 1, characterized in that the cap (30, 30') is made of plastic.

3. A gas spring in accordance with claim 1, characterized in that the cap (30, 30') is joined to the valve body (21, 21', 21") in the region between the inner ring seal (50) and the outer groove (25) by means of welding, gluing or the like.

4. A gas spring in accordance with claim 1, characterized in that the ring (37") serves as a bearing surface for the inner ring seal (47), effecting sealing in the outward direction.

5. A gas spring in accordance with claim 1, characterized in that the ring (37, 37") is made of plastic.

6. A gas spring in accordance with claim 1, characterized in that the ring (37, 37") is joined to the valve body (21, 21', 21") by a press fit.

# FIG. 1

# FIG. 2

# FIG. 3